# FASCICULE DE BREVET EUROPEEN

(11) **EP 4 345 319 B1**
(45) Date de publication et mention de la délivrance du brevet: **17.12.2025**
(21) Numéro de dépôt: 23199036.7
(22) Date de dépôt: 22.09.2023
(51) Int. Cl.: F16B 5/06, B60R 1/00, F16B 21/07, F16B 21/08, F16B 21/09, B60R 13/02

(54) **DISPOSITIF DE FIXATION**
BEFESTIGUNGSVORRICHTUNG
FIXING DEVICE

(30) Priorité: 30.09.2022 FR 2210016
(43) Date de publication de la demande: 03.04.2024
(73) Titulaire: A. RAYMOND ET CIE, 38019 Grenoble Cedex 1 (FR)
(72) Inventeur: BOISSIER, Adrien, 38000 Grenoble (FR)
(74) Mandataire: Santarelli

(56) Documents cités:
- DE-A1- 102010 008 040
- DE-A1- 102020 115 308
- US-A1- 2012 155 985

## Description

### Domaine technique de l'invention

La présente invention concerne un dispositif de fixation, notamment une agrafe destinée à être insérée et montée dans un trou pour fixer une première pièce sur une deuxième pièce. Par exemple, l'agrafe est utilisée pour fixer des éléments de garniture de véhicule, tels que garniture d'habillage intérieur, garniture de seuil de porte, etc., sur une tôle de véhicule.

### Etat de l'art antérieur

On connaît que pour fixer des éléments de garniture l'agrafe se chausse souvent dans un pontet de côté de garniture, et se clippe dans un trou de côté de tôle. La tôle est souvent sous forme rectangulaire ou oblong, et les épaisseurs des tôles sont différentes selon le type de la tôle. L'agrafe actuelle existe en plusieurs références dont chacune correspond à une seule épaisseur ou une plage limitée d'épaisseur de la tôle, alors qu'il faut changer l'agrafe pour différentes utilisations. De plus, l'agrafe actuelle est une agrafe métalloplastique, dont le recyclage est compliqué.

Document US2012/155985A1 divulgue un dispositif de connexion pour deux composants qui comprend un élément d'ancrage avec une section allongée insérable dans une ouverture du premier composant, une section de tête servant de surface de contact pour le deuxième composant, et un élément de fixation avec une tige filetée.

Document DE102020115308A1 divulgue une pince de fixation comprenant une cheville de fixation et un manchon de fixation.

Document DE102010008040A1 divulgue un dispositif qui comprend un élément d'ancrage avec une tête comportant une ouverture, et un élément de fixation doté d'une section de tige avec un élément de verrouillage extérieur et un évidement de verrouillage.

### Exposé de l'invention

La présente invention a pour objectif de pallier les inconvénients précités, en proposant un dispositif de fixation en une seule référence qui permet à fixer des éléments de garniture sur des tôles ayant des épaisseurs différentes.

À cet effet, la présente invention concerne un dispositif de fixation pour fixer une première pièce, par exemple, une garniture, sur une deuxième pièce ayant un trou, par exemple, une tôle, comportant un pêne et une ancre. Le pêne comporte une tête et une tige qui s'étend à partir de la tête, et l'ancre comporte un corps ayant un couvercle dans lequel une ouverture mène à une zone d'insertion, dans un sens axial du corps de l'ancre, qui est destinée à recevoir la tige du pêne.

L'ancre comporte au moins deux branches qui font saillie à partir du corps de l'ancre. Les branches sont susceptibles d'être rétractées vers l'axe du corps lorsque l'ancre entre dans le trou de la deuxième pièce.

Les branches comportent chacune au moins deux étages, selon le sens axial du corps. Une fois que l'ancre est introduite dans le trou de la deuxième pièce, l'un des étages de chaque branche appuie sur une surface inférieure de la deuxième pièce, et le couvercle de l'ancre appuie sur une surface supérieure de la deuxième pièce qui est opposée de la surface inférieure, c'est-à-dire, la deuxième pièce se trouve entre le couvercle et l'un des étages de chaque branche.

Les distances entre le couvercle de l'ancre et des étages de branche sont différentes, correspondants aux différentes épaisseurs de la deuxième pièce. Ainsi, les deuxième pièces, telles que les tôles, ayant différentes épaisseurs peuvent être retenu entre le couvercle de l'ancre et l'un des étages de branche. En conséquent, à titre d'exemple, le dispositif de fixation peut être utilisé pour des tôles sur toute la plage d'épaisseur connue actuellement. On n'est pas obligé de changer la référence du dispositif de fixation pour adapter des différentes tôles, ainsi la fabrication des dispositifs de fixation et leur utilisation sont beaucoup simplifiées.

Selon l'invention, le couvercle de l'ancre se présente sous forme d'un parapluie. Ainsi, le couvercle en forme de parapluie permet d'empêcher des solides tels que la poussière ou des liquides indésirables de pénétrer le trou de la deuxième pièce à côté de la première pièce, ainsi de diminuer le bruit qui peut passer à travers le trou de la deuxième pièce. Plus particulièrement, pour une fixation d'une garniture sur une tôle de véhicule, le couvercle en forme de parapluie du dispositif de fixation de la présente invention aide à empêcher la poussière et le bruit d'entrer dans l'intérieur du véhicule.

Avantageusement, les bords du parapluie appuient sur la surface supérieure de la deuxième pièce, d'une façon en formant un espace fermé entre le parapluie et la surface supérieure de la deuxième pièce. Le parapluie permet une bonne prise des pièces à fixer, en présentant un effet d'aspiration, surtout quand le parapluie est de matière flexible.

Dans un mode de réalisation préféré, l'ancre comporte des ailes de guidage suivant l'axe du corps, configurées à guider l'introduction de l'ancre dans le trou de la deuxième pièce et à empêcher la rotation de l'ancre dans le trou de la deuxième pièce. Cela permet un montage plus aisé et une fixation plus solide des deux pièces à fixer.

De préférence, la tête du pêne comporte une protubérance sur un côté de la tête. La protubérance fonctionne comme un détrompage permettant à l'opérateur de s'assurer la bonne direction d'assemblage.

En plus, grâce aux étages des branches de l'ancre du dispositif de fixation, on n'a besoin que d'une seule référence de dispositif de fixation pour des deuxièmes pièces de différentes épaisseurs, ainsi on n'a non plus besoin de fabriquer des différents dispositifs de fixation avec des différents détrompages pour les distinguer pendant l'utilisation. Un détrompage unique, comme la protubérance susmentionnée, permet de faciliter la procédure de fabrication du dispositif de fixation.

Selon un mode de réalisation particulier, les parois du corps qui forme la zone d'insertion sont configurées de manière à être déformées vers l'extérieur du corps, lorsque la tige du pêne entre dans la zone d'insertion, et à se remettre en place pour retenir la tige, spécialement, à bloquer la tige lors de l'arrachement du pêne à partir de l'ancre.

Cette configuration permet un bon effet d'aspiration lors du montage et la présence d'une tension dans l'assemblage.

Préférentiellement, la zone d'insertion comporte une section réduite, dite une zone de clippage, et la tige du pêne a une section élargie destinée à être bloquée par la zone de clippage lors de l'arrachement du pêne à partir de l'ancre.

Selon un mode de réalisation préféré, les branches de l'ancre sont configurées de façon que le déplacement des branches n'interfère pas la zone d'insertion.

Ainsi, le clippage et l'arrachement de l'ancre en entrant et sortant de la deuxième pièce à fixer n'affecte pas la prise de la tige du pêne dans l'ancre, et la prise de la tige dans la zone d'insertion n'empêche pas non plus le clippage et l'arrachement de l'ancre. Cela permet une décorrélation des fonctions ou des moyens de fixation, surtout des moyens de fixation entre l'ancre et la tôle, et entre l'ancre et le pêne. Le montage du dispositif de fixation est alors plus aisé et flexible.

Selon une variante spécifique, lors de l'assemblage, la tête du pêne est séparée du couvercle de l'ancre par une distance dans le sens axial, et la première pièce est retenu entre la tête du pêne et le couvercle de l'ancre. Plus particulièrement, la tige du pêne comporte un cou lié directement à la tête, destiné à être reçu dans un trou ou une encoche de la première pièce. Le cou permet d'assurer le positionnement du dispositif de fixation dans la première pièce à fixer, et de diriger l'assemblage. Avantageusement, la tête est plus large que le cou.

De préférence, le couvercle de l'ancre comporte un logement étant destiné à délimiter la position du cou du pêne lors de l'assemblage. Préférentiellement, le cou du pêne comporte une zone étant destiné à longer dans le logement du couvercle de l'ancre, pour faciliter la coopération de contact entre le cou et le couvercle.

De façon avantageuse, il existe un gap entre le cou et le logement côté ancre dans les sens horizontaux selon la surface de la deuxième pièce, lors de l'assemblage. Cela permet un rattrapage de jeu entre les deux pièces à fixer. Par exemple, la tolérance de fabrication de la garniture et la tôle de véhicule peut causer un décalage/un jeu entre eux, selon la surface de la tôle, dans ce cas-là, le gap entre le cou du pêne et le logement du couvercle de l'ancre permet de régler la position mutuelle de la garniture et la tôle, ainsi de rattraper le décalage/jeu entre ces deux pièces à fixer.

Selon un mode de réalisation spécifique, l'ancre comporte au moins deux paires des branches, et la zone d'insertion se trouve au milieu des deux paires des branches, pour un montage plus équilibré.

Plus particulièrement, le corps de l'ancre est sous forme d'entonnoir. Cette forme d'entonnoir permet un guidage pour une introduction de l'ancre dans le trou de la deuxième pièce plus aisée, et pour réaliser un centrage du montage du dispositif de fixation dans la deuxième pièce. Avantageusement, la présente invention permet que le dispositif de fixation soit fabriqué d'une matière plastique, qui peut être recyclé facilement et complètement.

Dans un mode de réalisation particulier, le pêne est intégré dans la première pièce, pendant la fabrication, permettant de diminuer le nombre de pièces à utiliser pendant l'assemblage et de simplifier la procédure d'assemblage.

### Brève description des figures

D'autres avantages, buts et caractéristiques de la présente invention ressortent de la description qui suit faite, dans un but explicatif et nullement limitatif, en regard des dessins annexés.

Les figures annexées sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Dans des dessins annexés :
La figure 1 représente une vue d'un dispositif de fixation selon un mode de réalisation, avec une première pièce, en train d'être introduit dans un trou d'une deuxième pièce pour fixer les deux pièces ensemble ;
La figure 2 représente une vue en perspective de l'ancre selon un mode de réalisation ;
La figure 3 représente une vue de face d'un dispositif de fixation selon un mode de réalisation ;
La figure 4a illustre un assemblage de deux pièces à fixer avec un dispositif de fixation, sur une vue de face ;
La figure 4b illustre un assemblage de deux pièces à fixer avec un dispositif de fixation, dans lequel la deuxième pièce a une épaisseur différente de celle de la deuxième pièce de la figure 4(a), sur une vue de face.
La figure 5 représente une vue en perspective d'une ancre d'un dispositif de fixation selon un mode de réalisation ;
La figure 6 représente une vue en perspective d'un pêne du dispositif de fixation selon un mode de réalisation ;
La figure 7 représente une autre vue en perspective d'un pêne de la figure 6 ;
La figure 8 représente une vue de coupe du dispositif de fixation de la figure 1, selon un plan comportant l'axe axial ;
La figure 9 représente une vue de coupe d'une ancre de la figure 5, selon un plan comportant l'axe axial ;
La figure 10 représente une vue en perspective d'un dispositif de fixation selon un mode de réalisation ;
La figure 11 illustre un mode de montage d'un dispositif de fixation dans une première pièce à fixer ;
La figure 12 représente une vue de coupe d'un dispositif de fixation selon un mode de réalisation, selon un plan comportant l'axe axial.

### Description détaillée de modes de réalisation

Il convient de noter que certains éléments techniques bien connus de l'homme du métier sont ici décrits pour éviter toute insuffisance ou ambiguïté dans la compréhension de la présente invention.

La terminologie employée dans la présente description ne doit en aucun cas être interprétée de manière limitative ou restrictive, simplement parce qu'elle est employée en conjonction avec une description détaillée de certains modes de réalisation de l'invention.

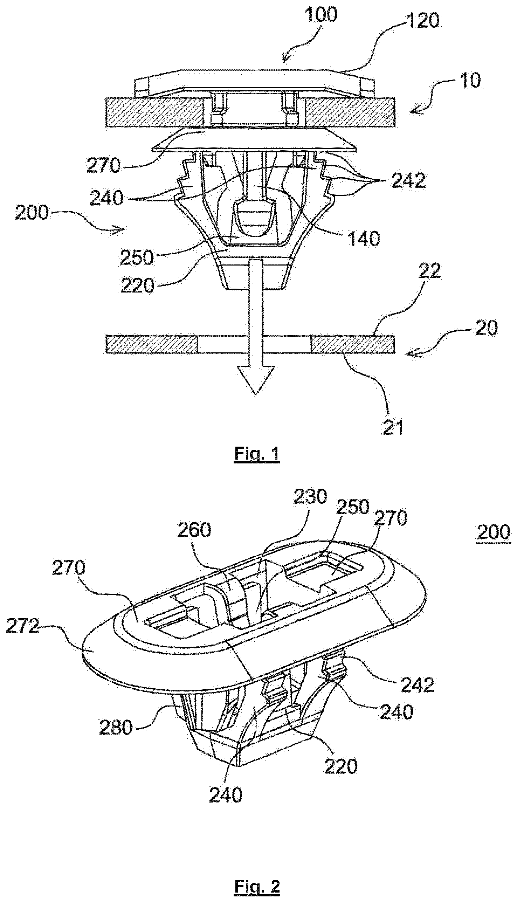

La figure 1 représente un dispositif de fixation 1 selon un mode de réalisation, pour fixer une première pièce 10 sur une deuxième pièce 20 ayant un trou. Le dispositif de fixation 1 comporte un pêne 100 et une ancre 200.

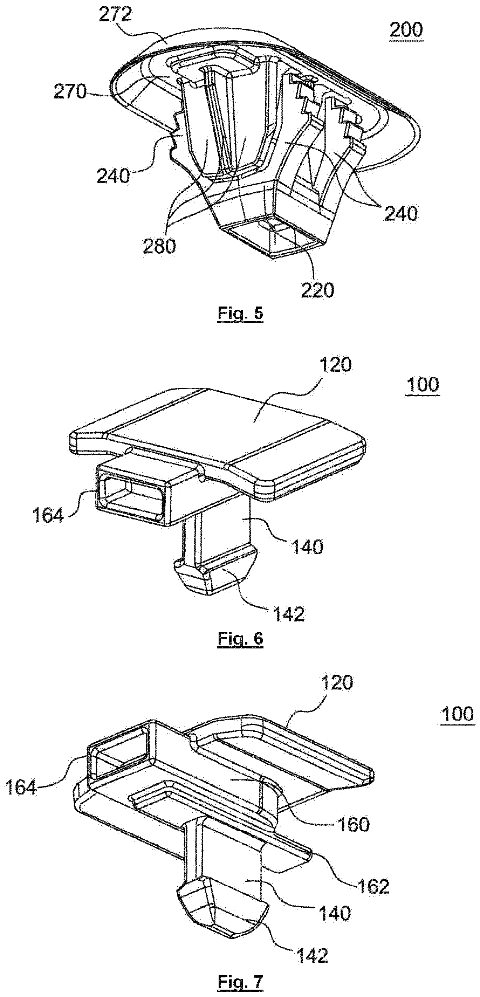

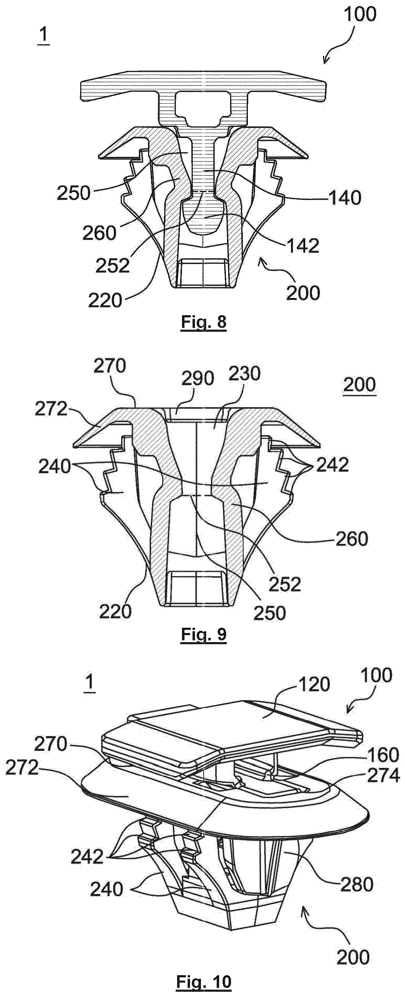

Dans la figure 1, le pêne 100 comporte une tête 120 et une tige 140, qui s'étend à partir de la tête 120 (voir aussi les figures 7 et 8).

Comme illustrée dans les figures 1 et 2, l'ancre 200 comporte un corps 220 ayant un couvercle 270 dans lequel une ouverture 230 (représentée dans la figure 2) mène à une zone d'insertion 250 dans un sens axial du corps 220, qui est apte à recevoir la tige 140 du pêne 100.

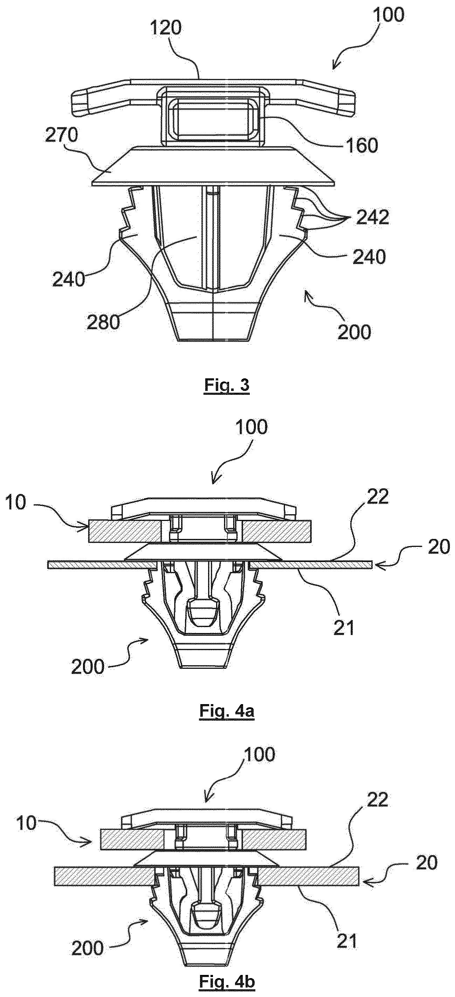

Dans les figures 1 et 3, l'ancre 200 comporte au moins deux branches 240 faisant saillie à partir du corps 220 de l'ancre 200, qui sont susceptibles de déplacer vers l'axe du corps 220 pendant l'introduction de l'ancre 200 dans le trou de la deuxième pièce 20, et les branches 240 comportent chacune au moins deux étages 242 selon le sens axial du corps 220.

Une fois que l'ancre 200 est introduite dans le trou de la deuxième pièce 20, la deuxième pièce est entre le couvercle 270 et l'un des étages 242 de chaque branche 240. C'est-à-dire, un des étages 242 de chaque branche 240 appuie sur une surface inférieure 21 de la deuxième pièce 20, et le couvercle 270 de l'ancre 200 appuie sur une surface supérieure 22 de la deuxième pièce 20 qui est opposée de la surface inférieure 21, comme illustré dans les figures 4a et 4b.

Dans un mode de réalisation particulière, les braches 240 comportent chacune quatre étages 242 comme illustré dans les figures 1, 3, 4a, 4b et 5 (dans les figures 1, 3, 4a et 4b, le premier étage est caché par le parapluie). Une fois que l'ancre est insérée dans la deuxième pièce 20, la surface inférieure 21 vient en contact sur l'un des quatre étages selon l'épaisseur de la deuxième pièce 20.

Par exemple, comme montré dans la figure 4a, quand l'épaisseur de la deuxième pièce 20 est petite, le deuxième étage de chaque branche 240 appuie sur la surface inférieur 21 de la deuxième pièce 20. Et pour une épaisseur intermédiaire, la deuxième pièce 20 est retenu par le troisième étage de chaque branche 240, comme dans la figure 4b.

Les branches 240 sont capables de travailler en flexion et en compression. De préférence, les branches 240 de l'ancre 200 sont configurées de façon que le déplacement des branches 240 n'interfère pas la forme de la zone d'insertion 250.

Dans les figures 2 et 5 selon un mode de réalisation, les branches 240 sont séparées des parois 260 par une distance dans le sens perpendiculaire à l'axe du corps 220. De préférence, les branches 240 ne sont pas liés à la couvercle 270, mais seulement liés aux parois 260 au niveau du bout du corps 220.

Ainsi, le mouvement des branches 240 de l'ancre 200 lors du montage et/ou démontage de l'ancre 200 dans/de la deuxième pièce 20 ne déforme pas la zone d'insertion 250 et n'entraine aucune force sur la tige 140 du pêne 100, pour ne pas affecter la tenue de la première pièce 10 entre la tête 120 du pêne 100 et le couvercle 170 de l'ancre 200.

Dans un mode de réalisation particulière, l'ancre 200 des figures 2 et 5 comporte deux paires des branches 240, et la zone d'insertion 250 se trouve entre les deux paires des branches 240, pour un assemblage plus équilibré. Dans des autres modes de réalisation, l'ancre 200 comporte plus de deux paires des branches 240 pour une fixation plus stable.

Dans un mode de réalisation préféré, le couvercle 270 de l'ancre 200 présente une forme de parapluie 272. Par exemple, comme illustré dans les figures 2 et 5, une extension du bord du couvercle 270 forme le parapluie 272. Les bords du parapluie 272 sont destinés à appuyer sur la surface supérieure 22 de la deuxième pièce 20, comme montré dans les figures 4a et 4b.

Préférentiellement, comme illustré dans les figures 2, 3 et 5, l'ancre 200 comporte des ailes de guidage 280 suivant l'axe du corps 220, configurées à guider l'introduction de l'ancre 200 dans le trou de la deuxième pièce 20 et à empêcher la rotation de l'ancre 200 dans le trou de la deuxième pièce 20. Avantageusement, des ailes de guidage 280 s'étendent à partir du couvercle 270 dans le sens de l'axe du corps 220, et s'arrangent dans plusieurs directions, pour bloquer la rotation de l'ancre 200 autour de l'axe du corps, ainsi empêcher la rotation du dispositif de fixation 1 dans le trou de la deuxième pièce 20.

Les figures 6 et 7 représentent deux vues en perspective d'un pêne du dispositif de fixation selon un mode de réalisation. Dans ce mode de réalisation spécifique, le pêne 100 comporte une protubérance 164 sur un côté de la tête 120, servant comme un détrompage. Plus particulièrement, c'est pour qu'un côté du pêne 100 se présente une apparence différente que l'autre côté opposé, et visible même lorsque le pêne 100 entre dans l'ancre 200. Lors de l'assemblage, la protubérance 164 aide à l'opérateur de connaître le sens de l'assemblage.

Dans un mode de réalisation préféré, comme montré dans les figures 6 et 7, la tige 140 du pêne 100 a une section élargie 142. La section élargie peut se situer au milieu de la tige 140, proche de l'extrémité de la tige 140, ou spécialement à l'extrémité de la tige 140. La section élargie 142 a une section transversale plus large que la tige 140. La section transversale est une section perpendiculaire à l'axe de la tige 140.

Dans un mode de réalisation particulier, des parois 260 du corps 220 qui forment la zone d'insertion 250 (voir les figures 2 et 8) sont configurées à être déformées vers l'extérieur du corps 220, lorsque la tige 140 du pêne 100 entre dans la zone d'insertion 250, à se remettre pour retenir la tige 140 pendant l'utilisation du dispositif de fixation 1, et en plus, à bloquer la tige 140 lorsque de l'arrachement du pêne 100 de l'ancre 200.

Particulièrement, comme montré dans les figures 2 et 8, les parois 260 sont liées au couvercle 270. Les parois 260 rejoignent à l'autre extrémité du corps 220 opposée du couvercle 270, pour que la structure de l'ancre 200 soit plus solide, et en même temps forment la zone d'insertion 250. Les parois 260 sont flexibles pour que la zone d'insertion 250 soit déformée pour recevoir et retenir la tige 140 du pêne 100. Grace à la flexibilité des parois 260, le montage et le démontage du dispositif de fixation 1 sont réalisés sans perte d'efforts importantes.

Plus particulièrement, comme illustré dans les figures 8 et 9, la zone d'insertion 250 comporte une section réduite, dite une zone de clippage 252, destinée à bloquer la section élargie 142 de la tige 140, ainsi à empêcher le déplacement du pêne 100 dans le sens axial lors de l'arrachement du pêne 100 à partir de l'ancre 200.

Plus particulièrement, les parois 260 se plient vers l'axe du corps 220 pour former la zone de clippage 252 de la zone d'insertion 250.

Pendant que la tige 140 entre dans la zone de clippage 252, les parois 260 se déplacent vers l'extérieur du corps 220 sous l'effet de force venu de la tige 140, pour que la tige 140 passe par la zone de clippage 252.

Une fois que la section élargie 142 entre dans une cavité de la zone d'insertion 250 après la zone de clippage 252, les parois 260 se redéforment vers l'axe du corps 220, ainsi que la section élargie 142 est bloquée par la zone de clippage 252 lors de l'arrachement du pêne 100 de l'ancre 200.

La zone de clippage 252 coopérée avec la tige 140 permet un bon effet d'aspiration lors du montage du pêne 100 dans l'ancre 200 et la présence d'une tension dans l'assemblage.

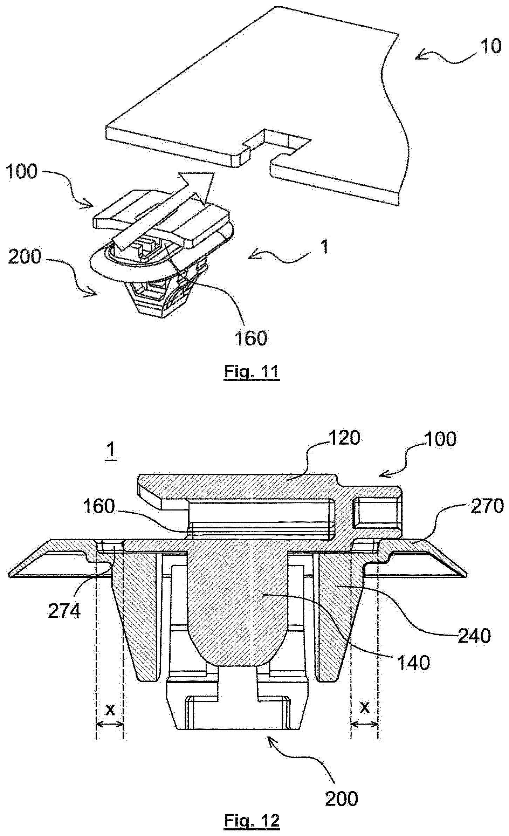

Dans un mode de réalisation plus particulière de la figure 10, la tige 140 du pêne 100 comporte un cou 160 lié directement à la tête 120, se logeant à l'extérieur de la zone d'insertion 250 contre l'ouverture 230 de l'ancre 200, destiné à entrer dans un trou ou glisser dans une encoche de la première pièce 10, comme illustré dans la figure 11.

Plus particulièrement, le cou 160 comporte une zone 162 liée à la tige 140 (voir la figure 7).

Préférentiellement, le couvercle 270 de l'ancre 200 de la figure 10 comporte un logement 274, plus particulièrement, un creux, étant destiné à recevoir le cou 160 du pêne 100, et à délimiter la position du cou 160, ainsi à délimiter la position du pêne 100 selon la surface de la deuxième pièce. Avantageusement, comme montré dans la figure 12, il existe un gap x entre le cou 160 et le logement 274 selon une surface de contact entre eux, une fois que le cou 160 vient en contact avec le logement 274. Cette configuration fonctionne comme un rattrapage de jeu entre la première et la deuxième pièce à fixer.

Avantageusement, le corps 220 de l'ancre 200 est de forme d'entonnoir, comme illustré dans les figures 1-5 et 8-11, pour faciliter une introduction de l'ancre 200 dans le trou de la deuxième pièce 20, et pour un centrage dans la deuxième pièce 20.

Le corps 220 de l'ancre 200 peut se présenter sous autres formes.

Grace à la configuration du dispositif de fixation 1 selon la présente invention, préférentiellement, le dispositif de fixation 1 peut être fabriqué complétement d'un matériau plastique. Le dispositif de fixation 1 selon l'invention peut être fabriqué par moulage de matière plastique connue, par exemple par injection thermoplastique, plus particulièrement en plastiques techniques tels que des polyamides, des résines d'acétal, des polyesters thermoplastiques. Avantageusement, le dispositif de fixation 1 est de matériaux connus permettant de résister au vieillissement et à la température, et en même temps permettant que les parois 260 du corps 220 de l'ancre 200 se déforment au niveau de la zone d'insertion 250, et préférentiellement, la déformation des branches 260 et/ou des parois 240 est élastique.

Dans le mode de réalisation décrit ci-après, il est fait référence à un dispositif de fixation 1 pour assembler une garniture à une tôle de véhicule. Cet exemple, non limitatif, est donné pour une meilleure compréhension de l'invention et n'exclut pas la mise en œuvre d'un assemblage en utilisant un dispositif de fixation selon un mode de réalisation de la présente invention d'autres types de pièces à fixer.

Dans un mode d'utilisation du dispositif de fixation 1, comme illustré dans la figure 11, après l'assemblage du pêne 100 dans l'ancre 200, le dispositif de fixation 1 est inséré dans une encoche de la garniture 10, et la garniture 10 est tenu entre la tête **120** du pêne 100 et le couvercle 270 de l'ancre 100. En tenant la garniture 10, l'ancre 200 du dispositif de fixation 1 est insérée dans un trou de la tôle 20 comme montré dans la figure 1. Les branches 240 déplacent vers l'axe du corps 220 pour que l'ancre 100 entre dans le trou de la tôle 20 et se remettent de façon élastique dans la position originale afin de retenir la tôle 20 entre l'un des étages 242 et le couvercle 270 de l'ancre 100. Particulièrement, le dispositif de fixation 1 selon l'invention s'adapte sur toute la plage d'épaisseur de tôle existante, afin de faciliter et standardiser la fabrication et l'utilisation du dispositif de fixation selon l'invention.

### LISTE DES SIGNES DE REFERENCE

**[Tableaux 1]**

| Références | Désignations |
|---|---|
| 1 | Dispositif de fixation |
| 10 | Première pièce (à fixer) |
| 20 | Deuxième pièce (à fixer) |
| 21 | Surface inférieure |
| 22 | Surface supérieure |
| 100 | Pêne |
| 120 | Tête |
| 140 | Tige |
| 142 | Section élargie |
| 160 | Cou |
| 162 | Zone |
| 164 | Protubérance |
| 200 | Ancre |
| 220 | Corps |
| 230 | Ouverture |
| 240 | Branche(s) |
| 242 | Étage(s) |
| 250 | Zone d'insertion |
| 252 | Zone de clippage |
| 260 | Parois |
| 270 | Couvercle |
| 272 | Parapluie |
| 274 | Logement |
| 280 | Ailes de guidage |

## Revendications

1. Dispositif de fixation (1) pour fixer une première pièce (10) sur une deuxième pièce (20) ayant un trou, comportant un pêne (100) et une ancre (200), dans lequel le pêne (100) comporte une tête (120) et une tige (140) qui s'étend à partir de la tête (120), et l'ancre (200) comporte un corps (220) ayant un couvercle (270) dans lequel une ouverture (230) mène à une zone d'insertion (250) dans un sens axial du corps (220), qui est apte à recevoir la tige (140) du pêne (100), dans lequel :
l'ancre (200) comporte au moins deux branches (240) faisant saillie à partir du corps (220) de l'ancre (200), qui sont susceptibles d'être rétractées vers l'axe du corps (220) lorsque l'ancre (200) entre dans le trou de la deuxième pièce (20), et les branches (240) comportent chacune au moins deux étages (242) selon le sens axial du corps (220), et lorsque l'ancre (200) est introduite dans le trou de la deuxième pièce (20), la deuxième pièce est entre le couvercle (270) et l'un des étages (242) de chaque branche (240);
le dispositif étant **caractérisé en ce que**:
le couvercle (270) de l'ancre (200) se présente sous forme d'un parapluie (272).

2. Dispositif de fixation (1) selon la revendication 1, dans lequel l'ancre (200) comporte des ailes de guidage (280) suivant l'axe du corps (220), configurées à guider l'introduction de l'ancre (200) dans le trou de la deuxième pièce (20) et à empêcher la rotation de l'ancre (200) dans le trou de la deuxième pièce (20).

3. Dispositif de fixation (1) selon la revendication 1 ou 2, dans lequel la tête (120) du pêne (100) comporte une protubérance (164) sur un côté de la tête (120).

4. Dispositif de fixation (1) selon l'une quelconque des revendications précédentes, dans lequel des parois (260) du corps (220) qui forme la zone d'insertion (250) sont configurées à être déformées vers l'extérieur du corps (220), lorsque la tige (140) du pêne (100) entre dans la zone d'insertion (250), et à se remettre pour retenir la tige (140).

5. Dispositif de fixation (1) selon l'une quelconque des revendications précédentes, dans lequel la zone d'insertion (250) comporte une section réduite, dite une zone de clippage (252), et la tige (140) du pêne (100) a une section élargie (142) destinée à être bloquée par la zone de clippage (252) lors de l'arrachement du pêne (100) à partir de l'ancre (200).

6. Dispositif de fixation (1) selon l'une quelconque des revendications précédentes, dans lequel les branches (240) de l'ancre (200) sont configurées de façon que le déplacement des branches (240) n'interfère pas la zone d'insertion (250).

7. Dispositif de fixation (1) selon l'une quelconque des revendications précédentes, dans lequel la tige (140) du pêne (100) comporte un cou (160) lié directement à la tête (120), destiné à être reçu dans un trou ou une encoche de la première pièce (10).

8. Dispositif de fixation (1) selon la revendication 7, dans lequel le couvercle (270) de l'ancre (200) comporte un logement (274) étant destiné à délimiter la position du cou (160) lors de l'assemblage.

9. Dispositif de fixation (1) selon l'une quelconque des revendications précédentes, dans lequel l'ancre (200) comporte deux paires des branches (240), et la zone d'insertion (250) se trouve au milieu des deux paires des branches (240).

10. Dispositif de fixation (1) selon l'une quelconque des revendications précédentes, dans lequel le corps (220) de l'ancre (200) présente une forme d'entonnoir.

11. Dispositif de fixation (1) selon l'une quelconque des revendications précédentes, est fabriquée d'une matière plastique.

12. Ensemble comportant un dispositif de fixation (1) selon l'une quelconque des revendications précédentes et la première pièce (10), le pêne (100) étant intégré dans la première pièce (10).

## Patentansprüche

1. Befestigungsvorrichtung (1) zum Befestigen eines ersten Teils (10) an einem zweiten Teil (20) mit einem Loch, die einen Riegel (100) und einen Anker (200) aufweist, wobei der Riegel (100) einen Kopf (120) und einen Stab (140) aufweist, der sich von dem Kopf (120) erstreckt, und der Anker (200) einen Körper (220) aufweist, der einen Deckel (270) hat, wobei eine Öffnung (230) zu einem Einführungsbereich (250) in axialer Richtung des Körpers (220) führt, der dazu ausgelegt ist, den Stab (140) des Riegels (100) aufzunehmen, wobei:
der Anker (200) mindestens zwei Schenkel (240) aufweist, die aus dem Körper (220) des Ankers (200) herausragen, die in Richtung der Körperachse (220) zurückgezogen werden können, wenn der Anker (200) in das Loch des zweiten Teils (20) eintritt, und die Schenkel (240) jeweils mindestens zwei Stufen (242) in axialer Richtung des Körpers (220) aufweisen, und wenn der Anker (200) in das Loch des zweiten Teils (20) eingeführt wird, befindet sich das zweite Teil zwischen dem Deckel (270) und einer der Stufen (242) jedes Schenkels (240);
wobei die Vorrichtung **dadurch gekennzeichnet ist, dass**:
der Deckel (270) des Ankers (200) die Form eines Schirms (272) besitzt.

2. Befestigungsvorrichtung (1) nach Anspruch 1, wobei der Anker (200) Führungsflügel (280) entlang der Körperachse (220) aufweist, die so eingerichtet sind, dass sie das Einführen des Ankers (200) in das Loch des zweiten Teils (20) führen und das Drehen des Ankers (200) in das Loch des zweiten Teils (20) verhindern.

3. Befestigungsvorrichtung (1) nach Anspruch 1 oder 2, wobei der Kopf (120) des Riegels (100) eine Erhebung (164) auf einer Seite des Kopfes (120) aufweist.

4. Befestigungsvorrichtung (1) nach einem der vorhergehenden Ansprüche, wobei Wände (260) des Körpers (220), die den Einführungsbereich (250) bilden, so eingerichtet sind, dass sie sich nach außen des Körpers (220) verformen, wenn der Stab (140) des Riegels (100) in den Einführungsbereich (250) eintritt, und sich zurückstellen, um den Stab (140) zu halten.

5. Befestigungsvorrichtung (1) nach einem der vorhergehenden Ansprüche, wobei der Einführungsbereich (250) einen reduzierten Querschnitt, einen Clippingbereich (252), aufweist, und der Stab (140) des Riegels (100) einen erweiterten Querschnitt (142) hat, der dazu bestimmt ist, durch den Clippingbereich (252) bei dem Abreißen des Riegels (100) von dem Anker (200) blockiert zu werden.

6. Befestigungsvorrichtung (1) nach einem der vorhergehenden Ansprüche, wobei die Schenkel (240) des Ankers (200) so eingerichtet sind, dass die Bewegung der Schenkel (240) den Einführungsbereich (250) nicht beeinträchtigt.

7. Befestigungsvorrichtung (1) nach einem der vorhergehenden Ansprüche, wobei der Stab (140) des Riegels (100) einen direkt mit dem Kopf (120) verbundenen Hals (160) aufweist, der in einem Loch oder einer Kerbe des ersten Teils (10) aufgenommen werden soll.

8. Befestigungsvorrichtung (1) nach Anspruch 7, wobei der Deckel (270) des Ankers (200) eine Aufnahme (274) aufweist, die dazu bestimmt ist, die Position des Halses (160) bei dem Zusammenbau abzugrenzen.

9. Befestigungsvorrichtung (1) nach einem der vorhergehenden Ansprüche, wobei der Anker (200) zwei Paare der Schenkel (240) aufweist und der Einführungsbereich (250) sich in der Mitte der beiden Paare der Schenkel (240) befindet.

10. Befestigungsvorrichtung (1) nach einem der vorhergehenden Ansprüche, wobei der Körper (220) des Ankers (200) eine Trichterform aufweist.

11. Befestigungsvorrichtung (1) nach einem der vorhergehenden Ansprüche, die aus einem Kunststoff gefertigt ist.

12. Baugruppe, die eine Befestigungsvorrichtung (1) nach einem der vorhergehenden Ansprüche und dem ersten Teil (10) aufweist, wobei der Riegel (100) in das erste Teil (10) integriert ist.

## Claims

1. Fastening device (1) for attaching a first part (10) to a second part (20) having a hole, comprising a latch (100) and an anchor (200), wherein the latch (100) comprises a head (120) and a rod (140) that extends from the head (120), and the anchor (200) comprises a body (220) having a cover (270) wherein an opening (230) leads to an insertion zone (250) in an axial direction of the body (220), which is capable of receiving the rod (140) of the latch (100), wherein:
the anchor (200) comprises at least two branches (240) protruding from the body (220) of the anchor (200), which are able to be retracted toward the axis of the body (220) when the anchor (200) enters the hole in the second part (20), and the branches (240) each comprise at least two stages (242) in the axial direction of the body (220), and when the anchor (200) is inserted into the hole in the second part (20), the second part is between the cover (270) and one of the stages (242) of each branch (240);
the device being **characterised in that**:
the cover (270) of the anchor (200) is in the form of an umbrella (272).

2. Fastening device (1) according to claim 1, wherein the anchor (200) includes guide wings (280) along the axis of the body (220), configured to guide the insertion of the anchor (200) into the hole in the second part (20) and to prevent the rotation of the anchor (200) in the hole in the second part (20).

3. Fastening device (1) according to claim 1 or 2, wherein the head (120) of the latch (100) comprises a protrusion (164) on one side of the head (120).

4. Fastening device (1) according to any one of the preceding claims, wherein walls (260) of the body (220) that forms the insertion zone (250) are configured to be deformed towards outside of the body (220), when the rod (140) of the latch (100) enters the insertion zone (250), and to return to hold the rod (140).

5. Fastening device (1) according to any one of the preceding claims, wherein the insertion zone (250) comprises a reduced section, called a clipping zone (252), and the rod (140) of the latch (100) has an enlarged section (142) intended to be locked by the clipping zone (252) when the latch (100) is pulled away from the anchor (200).

6. Attachment device (1) according to any one of the preceding claims, wherein the branches (240) of the anchor (200) are configured so that the movement of the branches (240) does not interfere with the insertion zone (250).

7. Fastening device (1) according to any one of the preceding claims, wherein the rod (140) of the latch (100) comprises a neck (160) directly connected to the head (120), intended to be received in a hole or a notch in the first part (10).

8. Fastening device (1) according to claim 7, wherein the cover (270) of the anchor (200) comprises a housing (274) intended to delimit the position of the neck (160) during assembly.

9. Fastening device (1) according to any one of the preceding claims, wherein the anchor (200) comprises two pairs of branches (240), and the insertion zone (250) is in the middle of the two pairs of branches (240).

10. Fastening device (1) according to any one of the preceding claims, wherein the body (220) of the anchor (200) has a funnel shape.

11. Fastening device (1) according to any one of the preceding claims, is made of a plastics material.

12. Assembly comprising a fastening device (1) according to any one of the preceding claims and the first part (10), the latch (100) being integrated in the first part (10).
